# EUROPEAN PATENT SPECIFICATION

(11) **EP 2 920 507 B1**
(45) Date of publication and mention of the grant of the patent: **18.04.2018**
(21) Application number: 13795016.8
(22) Date of filing: 20.08.2013
(51) Int. Cl.: F21S 10/00, G02B 19/00, F21V 14/06, F21V 8/00, G02B 27/09, F21W 131/406

(54) **LUMINAIRE WITH ARTICULATED ELONGATED LIGHT BEAM HOMOGENIZER**
LEUCHTE MIT GELENKIGEM LÄNGLICHEM LICHTSTRAHLHOMOGENISIERER
LUMINAIRE MUNI D'UN HOMOGÉNÉISATEUR DE FAISCEAU LUMINEUX ALLONGÉ ARTICULÉ

(30) Priority: 20.08.2012 US 201261691237 P
(43) Date of publication of application: 23.09.2015
(73) Proprietor: ROBE lighting s.r.o., 75661 Roznov pod Radhostem (CZ)
(72) Inventor: JURIK, Pavel, Austin, Texas 78720 (US)
(74) Representative: Käck, Stefan
(86) International application number: PCT/US2013/055788
(87) International publication number: WO 2014/031641

(56) References cited:
- EP-A2- 2 177 816
- EP-A2- 2 177 817
- US-A1- 2003 198 050
- US-A1- 2007 217 204
- US-A1- 2010 103 677
- US-A1- 2012 014 114
- US-A1- 2012 195 038

## Description

### TECHNICAL FIELD OF THE INVENTION

The present invention generally relates to
a luminaire with a light source and a carrier to deploy a light beam homogenizer.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. The beam pattern is often provided by a stencil or slide called a gobo which may be a steel, aluminum or etched glass pattern. The products manufactured by Robe Show Lighting such as the Robin 600E Spot are typical of the art.

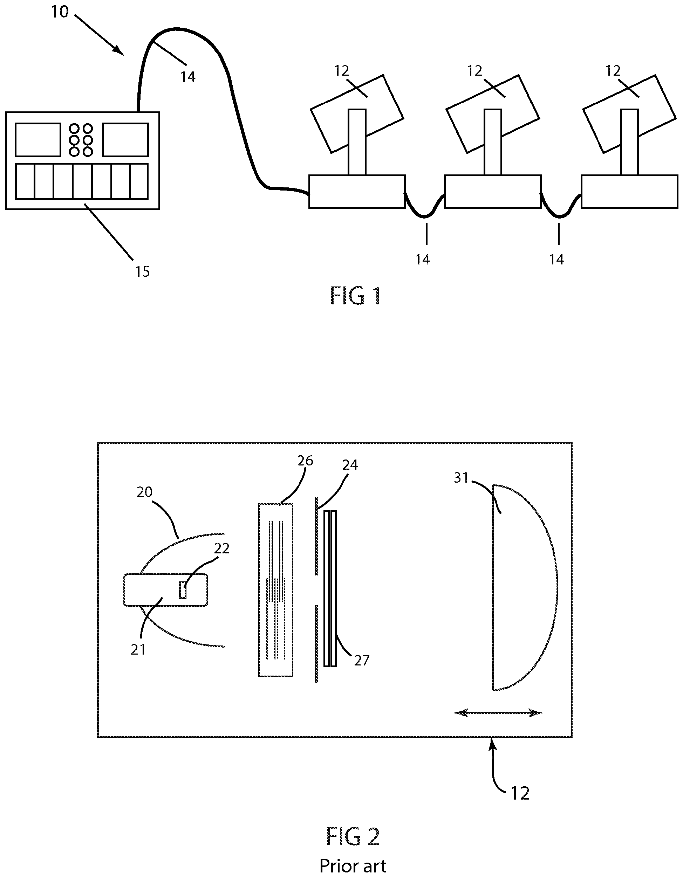

**Figure 1** illustrates a typical multiparameter automated luminaire system **10.** These systems commonly include a plurality of multiparameter automated luminaires **12** which typically each contain on-board a light source (not shown), light modulation devices, electric motors coupled to mechanical drives systems and control electronics (not shown). In addition to being connected to mains power either directly or through a power distribution system (not shown), each luminaire is connected is series or in parallel to data link **14** to one or more control desks **15.** The luminaire system **10** is typically controlled by an operator through the control desk **15.** Consequently to effect this control both the control desk **15** and the individual luminaires typically include electronic circuitry as part of the electromechanical control system for controlling the automated lighting parameters.

**Figure 2** illustrates a prior art automated luminaire **12.** A lamp **21** contains a light source **22** which emits light. The light is reflected and controlled by reflector **20** through an aperture or imaging gate **24.** The resultant light beam may be further constrained, shaped, colored and filtered by optical devices **26** and **27** which may include dichroic color filters, dimming shutters, and other optical devices well known in the art. The final output beam may be transmitted through output optical system **31** which may contain multiple elements and form a zoom lens system.

Such prior art automated luminaires use a variety of technologies as the light sources for the optical system. For example it is well known to use incandescent lamps, high intensity discharge lamps, plasma lamps, and LEDs as light sources in such a luminaire. These light sources and associated optical systems may suffer from limitations that make them less than ideal for such an application. Incandescent lamps, for example, typically have a large filament which performs inefficiently in the small size optics typical of such a product necessitated by the requirement to pan and tilt the luminaire rapidly and thus to keep the size and weight down to a minimum. This mismatch will significantly reduce the output of the luminaire. High intensity discharge lamps and plasma lamps have small light sources, which provide more efficient optical systems and a smaller unit. However, the light distribution from a combination of a small light source and an ellipsoidal reflector, although of high efficiency, is usually very peaky. It often has a bright center beam and drops off rapidly to the edges. For some applications this light distribution is useful, particularly if used with a small aperture, as it is possible to obtain a very high intensity light beam. However, for other applications it is more useful to have a better homogenized, flatter light distribution. Such a flat distribution may provide better projection of imagery from gobos or patterns and better homogenization of color mixing.

Without homogenization of the light beam the prior art optical systems often produce uneven and irregular coloring and dimming across the output beam. The light passing through optical devices **26** is already partially collimated by reflector **20** such that, for example, a yellow filter partially inserted into the beam within optical device **26** will color the edges of the output beam yellow and not, as desired, color the entire beam. Similarly the insertion of dimming shutters, flags or other mechanical dimmer will not produce an even dimming effect across the beam but will instead tend to vignette the beam and produce visible patterning. An effective homogenization system is needed to correct these problems so as to evenly distribute the color across the entire beam and to provide an evenly distributed optical dimming system.

There is a need for an automated luminaire using a light source with a homogenization system that may be dynamically adjusted to provide the user with the option of a high output peaky light beam, or a flattened homogenized light beam.

U.S. Patent Application Publication No. US 2010/0103677 A1 discloses a theater lighting apparatus comprising a base, a communications port, a processor, a memory, and a lamp housing. The lamp housing may include a lamp, a reflector, an output lens, a motor, and a homogenizing lens. The homogenizing lens may be comprised of a plurality of radially arranged lenticular lenses. The processor may be programmed to enable a motor to vary a position of the homogenizing lens in relation to a position of the output lens. The homogenizing lens may be comprised of a first half and a second half, each of which may have a plurality of radially arranged lenticular lenses.

In European Patent Application Publication No. EP 2 177 816 A2 a method for improving light collection efficiency and beam homogenization is described. A light integrator is used which utilizes internal reflection to homogenize and constrain the light from a LED.

### SUMMARY

The invention is defined in claim 1. A partiular embodiment is set out in the dependent claim.

In particular, a luminaire is disclosed which comprises a light source, a first articulated carrier, and a second articulated carrier. The light source generates a light beam with a light beam axis and a light beam origin at the light source and a light beam exit down the axis from the light source. The first articulated carrier deploys a light beam homogenizer into the light beam and removes the homogenizer from the light beam. The second articulated carrier articulates other optical components of the luminaire along the light beam axis in coordination with the deployment or removal of the homogenizer from the light beam. The homogenizer is an elongated homogenizer. The coordination of the first and second articulated carriers is such that before the first articulated carrier deploys the elongated homogenizer into the light beam, the second carrier is articulated to move the other optical components to make space for the elongated homogenizer.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE 1** illustrates a typical automated lighting system;
**FIGURE 2** illustrates a prior art luminaire system;
**FIGURE 3** illustrates an embodiment of a luminaire with an articulated elongated homogenizer in place;
**FIGURE 4** illustrates an embodiment of the luminaire with the elongated homogenizer retracted from the light beam path;
**FIGURE 5** illustrates an embodiment of the elongated homogenizer of the luminaire illustrated in Figure 3 and Figure 4;
**FIGURE 6** illustrates in greater detail the embodiment of a luminaire with an articulated elongated homogenizer in place in the path of the light beam;
**FIGURE 7** illustrates an alternative embodiment of a luminaire with an articulated elongated homogenizer;
**FIGURE 8** illustrates the embodiment of the luminaire illustrated in **Figure 6** with the articulated elongated homogenizer retracted: and
**FIGURE 9** illustrates an alternative embodiment of a luminaire with an articulated elongated homogenizer.

### DETAILED DESCRIPTION OF THE INVENTION

Preferred embodiments of the present invention arc illustrated in the FIGURES, like numerals being used to refer to like and corresponding parts of the various drawings.

The present invention generally relates to an automated luminaire, specifically to a luminaire utilizing a small light source. Compact high intensity discharge (HID) lamps, LED light sources, and plasma light sources offer a compact light source with consequent high efficiency optical coupling to reflectors and down-stream optical systems.

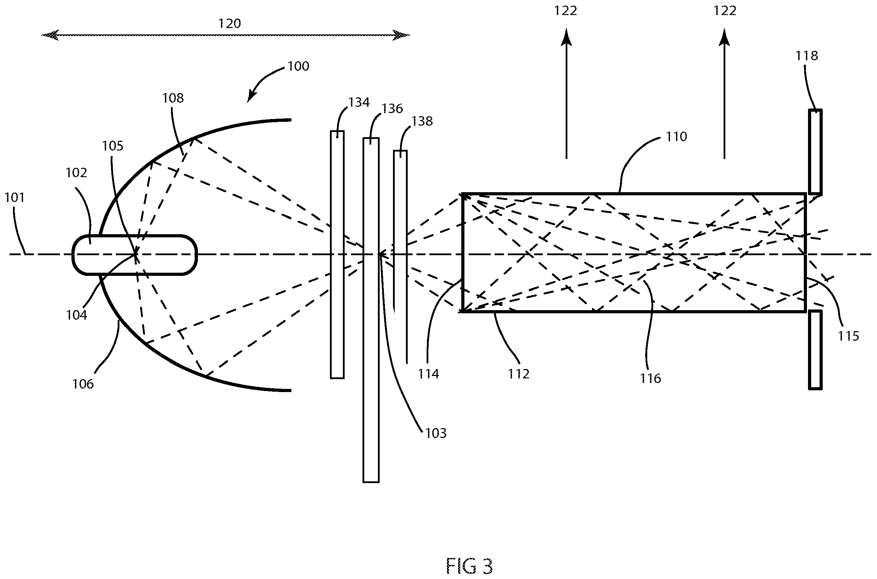

**Figure 3** illustrates an embodiment of the invention utilizing a light engine **100** in an automated luminaire. A lamp **102** contains a light source **104** which emits light. This emitter may be the arc gap of an HID lamp, or the capsule of a plasma lamp or other light source. The light **108** is reflected and controlled by reflector **106** generally towards a focal point **103** along the optical axis **101** of the light engine **100.** The light beam may be further constrained, shaped, colored, filtered or otherwise modulated by optical devices **134, 136** and **138** which may include dichroic color filters, color mixing systems, dimming flags, strobing flags, effects glass, homogenizers and other optical devices well known in the art.

The optical system illustrated incorporates an articulated elongated light collector integrator **110**. Light integrator **110** is a device utilizing internal reflection so as to collect homogenize and constrain and conduct the light from light source **104** and reflector **106** to other optical element(s). Light integrator **110** may be a hollow tube **112** with a reflective inner surface such that light impinging into the entry port may be reflected multiple times along the tube before leaving at the exit port. Light **108** enters integrator **110** at an entry port 114, light is then reflected down the tube in different directions from the light source such that the
light beams **116** will mix forming a composite beam where different colors of light arc homogenized and an evenly colored and more evenly distributed beam is emitted through an exit port 115. Light integrator 110 may be a square tube, a hexagonal tube, a heptagonal tube, a circular tube, an octagonal tube or a tube of any other cross section. In a further embodiment light integrator **110** may be a solid rod constructed of glass, transparent plastic or other optically transparent material where the reflection of the incident light beam within the rod is due to total internal reflection (TIR) from the interface between the material of the rod and the surrounding air. The integrating rod may be a square rod, a hexagonal rod, a heptagonal rod, an octagonal rod, a circular rod, or a rod of any other cross section. The homogenized light exits from the light integrator **110** and may then be further controlled and directed by other optical elements not shown in this figure.

A feature of a light integrator **110** of **Figure 3** which comprises a hollow or tube or solid rod where the sides of the rod or tube are essentially parallel and the entry port **114** and exit port **115** are of the same size is that the divergence angle of light exiting the integrator **110** at exit port **115** will be the same as the divergence angle for light entering the integrator **110** at entry port **114.** Thus a parallel sided integrator **110** has no effect on the beam divergence and will transfer the position of the focal point of light engine **100** to the integrator's **110** exit port **115.** The light exiting integrator **110** will be well homogenized with the light mixed together into a single light beam and may be used as our output, or may be further modified by downstream optical systems.

Integrator **110** may advantageously have an aspect ratio where its length is much greater than its diameter. The greater the ratio between length and diameter, the better the resultant mixing and homogenization will be. Integrator **110** may be enclosed in a tube or sleeve which provides mechanical protection against damage, scratches, and dust.

In order to allow the user to remove the light integrator **110** from the optical system, the system illustrated has the capability of moving light integrator **110** out of the light path in the direction indicated by arrows **122.** It further has the ability to move all optical components **102, 104, 105, 106, 134, 136** and **138** in the direction indicated by arrows **120** as further described below.

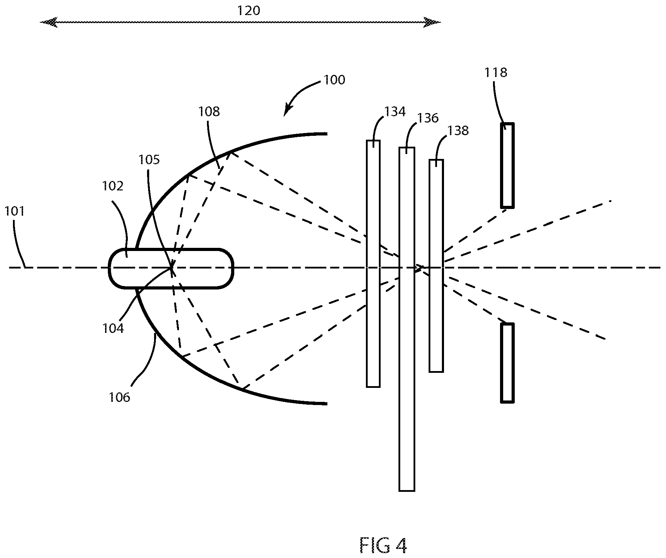

After the light integrator **110** has been removed from the light beam path along beam axis **101** in the direction indicated by arrows **122,** the optical components 102, 104, **105, 106, 134, 136** and **138** are moved in the direction indicated by arrows **120 toward** an **aperture 118** until the light engine system **100** is reconfigured as illustrated in **Figure 4****.**

Figure **4** illustrates the luminaire **100** in a configuration with the elongated homogenize removed from the light beam path and the remaining components are repositioned/reconfigured so that the light **108** is reflected and directed by reflector **106** generally towards aperture or imaging gate **118**. The light beam may be further constrained, shaped, colored, filtered or otherwise modulated by optical devices **134, 136** and **138** which may include dichroic color filters, color mixing systems, dimming flags, effects glass and other optical devices well known in the art. The elongated homogenizer **110** (not shown in **Figure 4****)** is not in place and the light beam passes through aperture **118** without passing through the homogenizer **110.** Optical components **102, 104, 105, 106**, **134, 136** and **138** have been moved forward, towards aperture **118,** such that the light beam correctly optically couples to aperture **118.**

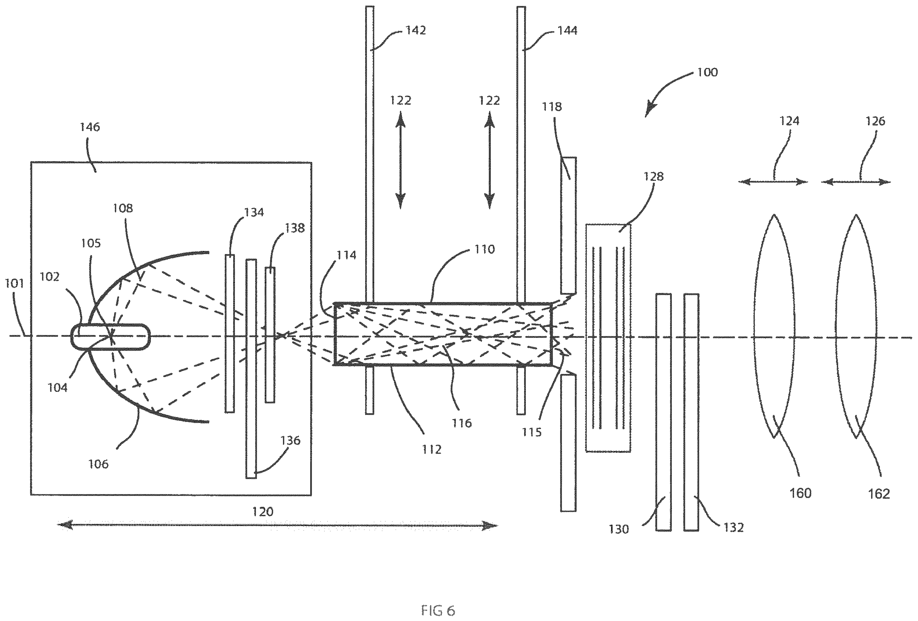

As illustrated in **Figure 6****,** **Figure 7****,** **Figure 8** **and** **Figure 9**. The articulated movement of the homogenizer **110** and optical components **102, 104, 105, 106, 134, 136** and **138** may be through motors and mechanisms as well known and understood in the art. Such motors may be stepper motors, servo motors, linear actuators, or other motors as known in the art. The motion of the homogenizer and optical components may be automatically controlled and coordinated by the control systems in the automated luminaire such that there is no possibility of collision of any of the moving components.

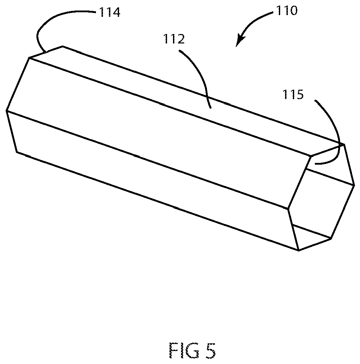

**Figure 5** is a perspective view of an embodiment of the light collector/integrator **110** as shown in **Figure 3****.** In the illustrated embodiment light collector/integrator **110** comprises the hollow tube 112 reflective on its inside surfaces that is polygonal in cross section and has the entry port 114 and the exit port 115.

**Figure 6** illustrates in greater detail a layout diagram of an embodiment of a luminaire **100** with an articulated elongated homogenizer **110**. Light source **104** and reflector **106** direct light 108 through optical devices 134, 136, and 138 into the entry port 114 of light integrator **110**. Optical devices **134, 136,** and **138** may comprise dichroic color filters, color mixing filters, dimming flags or shutters, strobing flags, and other optical devices known in the art where homogenization of the light beam after passing through them is advantageous. Within light integrator **110** the light beams **116** may reflect from the walls any number of times from zero to a number defined by the geometry of the tube 112 and the entrance angle and position of the incident light. This variation in path length and the different numbers of reflections causes homogenization of the light beams within light integrator **110.** A feature of a light integrator **110** which comprises a hollow tube or solid rod where the sides of the rod or tube are essentially parallel and the entry port **114** and exit port **115** arc of the same size is that the divergence angle of light exiting the integrator **110** will be the same as the divergence angle for light entering the integrator **110.** Thus a parallel sided integrator **110** has no effect on the beam divergence. Light exiting the light integrator **110** may pass through aperture **118** and then through optical elements **128, 130,** and **132.** Optical elements **128, 130,** and **132** may include but not be restricted to rotating gobos, static gobos, iris, color wheels, framing shutters, frost and diffusion filters, beam shapers and other optical devices known in the art. The light may then be further controlled and directed by optical elements 160 and 162 which may provide variable beam angle or zoom functionality as well as the ability to focus on various components of the optical system before emerging as the required light beam. Lenses 160 and 162 may be independently movable along the optical axis **124** and **126** so as to provide beam angle control over the exiting light beam. Although two optical elements 160 and 162 are herein illustrated the invention is not so limited and any optical system as known in the art may be utilized to control and focus the exiting light beam. In particular in further embodiments a single optical element alone may be utilized. In further embodiments, lenses 160 and 162 may form an achromatic optical system such that it provides the same degree of beam angle change to long wavelength red light as it docs to short wavelength blue light and thus avoids chromatic aberration. This ensures that the beams from the different colors of light are all the same size resulting in a uniformly colored combined beam. In yet further embodiments any number of lenses may be used as the lens system. In all cases, lenses may contain one or more optical elements. Lenses 160and 162 arc illustrated herein as bi-convex lenses however the invention is not so limited and lenses 160 and 162 may be any shaped optical element as well known in the art and may include any number of lenses including a single lens. This applies to any of the embodiments discussed herein.

In order to allow the user to remove the light integrator from the optical system, the system illustrated has the capability of moving light integrator **110** out of the light path in the direction indicated by arrows **122** via linear drives **142** and **144.** It further has the ability to move all optical components **102, 104, 105, 106, 134, 136** and **138** in the direction indicated by arrows **120** toward or away from the aperture **118**. In the embodiment illustrated these components **102, 104, 105, 106, 134, 136** and **138** arc mounted on an articulated carrier **146** which carries the components **102, 104, 105, 106, 134, 136** and **138** along the light beam axis **101** toward and away from the aperture **118.**

In some embodiments it is preferred that the articulation of the articulated carrier **146** of the light source **102** is initiated automatically in coordination with the articulated drives **142** and **144** of the elongated homogenizer **110** so that after the homogenizer is removed from the light path, the carrier **146** automatically moves components **102, 104, 105, 106. 134, 136** and **138** toward the aperture **118** and before the elongated homogenizer is articulated into the light beam path, the carrier moves components **102, 104, 105, 106, 134, 136** and **138** away from the aperture **118.** In some embodiments the light beam is automatically doused or dimmed out during these movements.

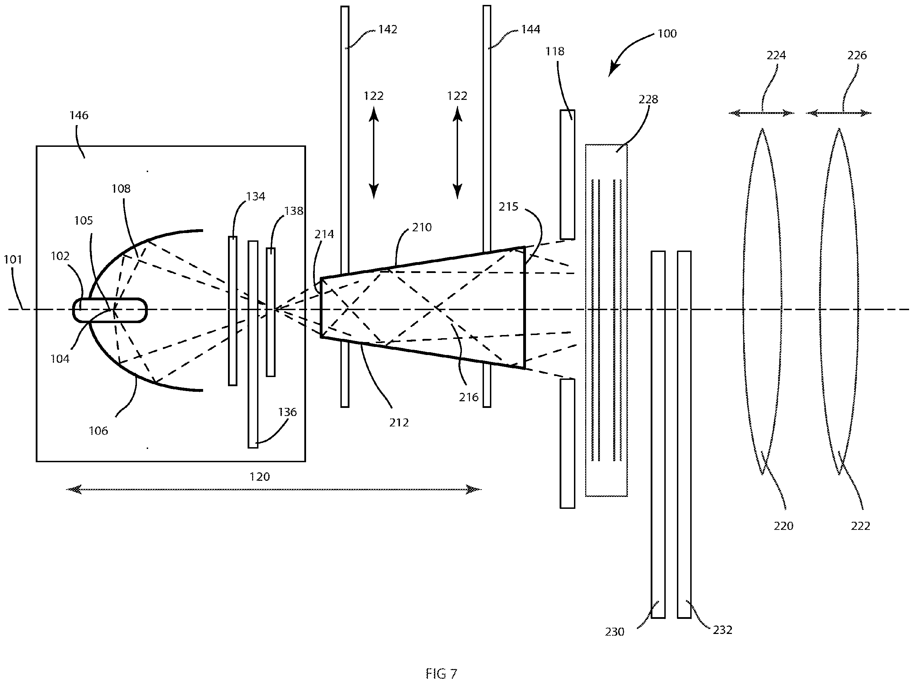

**Figure 7** illustrates a layout diagram of an embodiment of the invention. Light source **104** and reflector **106** direct light 108 through optical devices 134, 136 and 138 into an entry port **214** of tapered light integrator **210**. Optical devices **134. 136,** and **138** may comprise dichroic color filters, color mixing filters, dimming flags or shutters and other optical devices known in the art where homogenization of the light beam after passing through them is advantageous. Within tapered light integrator **210** the light beams may reflect from the walls any number of times from zero to a number defined by the geometry of the tube and the entrance angle and position of the incident light. This variation in path length and the different numbers of reflections causes homogenization of the light beams within light integrator **210.** A feature of a tapered light integrator **210** which comprises a hollow tube or solid rod where the sides of the rod or tube are tapered and the entry port
**214** is smaller than an exit port **215** is that the divergence angle of light exiting the integrator **210** will be smaller than the divergence angle for light entering the integrator **210.** The combination of a smaller divergence angle from a larger exit port 215 serves to conserve the etendue of the system. Thus a tapered integrator **210** may provide similar functionality to a condensing optical system and light may be delivered directly to aperture **118** without any need for further optical components to control and shape the beam.

Light exiting the light integrator **210** may pass through aperture **118** and then through optical elements **228, 230**, and **232.** Optical elements **228, 230,** and **232** may comprise gobo wheels, rotating gobo wheels, pattern or effects, irises, framing shutters or other optical devices as well known in the art. The light may then be further controlled and directed by optical elements **220** and **222** which may provide variable beam angle or zoom functionality as well as the ability to focus on various components of the optical system before emerging as the required light beam. Lenses **220** and **222** may be independently movable along the optical axis **224** and **226** so as to provide beam angle control over the exiting light beam. Although two optical elements **220** and **222** are herein illustrated the invention is not so limited and any optical system as known in the art may be utilized to control and focus the exiting light beam. In particular in further embodiments a single optical element alone may be utilized. In further embodiments, lenses **220** and **222** may form an achromatic optical system such that it provides the same degree of beam angle change to long wavelength red light as it does to short wavelength blue light and thus avoids chromatic aberration. This ensures that the beams from the different colors of light are all the same size resulting in a uniformly colored combined beam. In yet further embodiments any number of lenses may be used as the lens system. In all cases, lenses may contain one or more optical elements. Lenses **220** and **222** are illustrated herein as bi-convex lenses however the invention is not so limited and lenses **220** and **222** may be any shaped optical element as well known in the art and may include any number of lenses including a single lens. This applies to any of the embodiments discussed herein.

In order to allow the user to remove the light integrator from the optical system, the system illustrated has the capability of moving light integrator **210** out of the light path in the direction indicated by arrows **122.** It further has the ability to move all optical components **102, 104, 105, 106, 134, 136** and **138** in the direction indicated by arrows **120.**

Optical elements such as **134, 136, 138, 128, 130, 132, 228, 230,** and **232** may be controlled and moved by motors. Motors may be stepper motors, servo motors or other motors as known in the art. In this embodiment the components **102, 104, 105, 106, 134, 136** and **138** are also mounted on a carrier **146** which operates with respect to these components as described above in regard to **Figure 6****.**

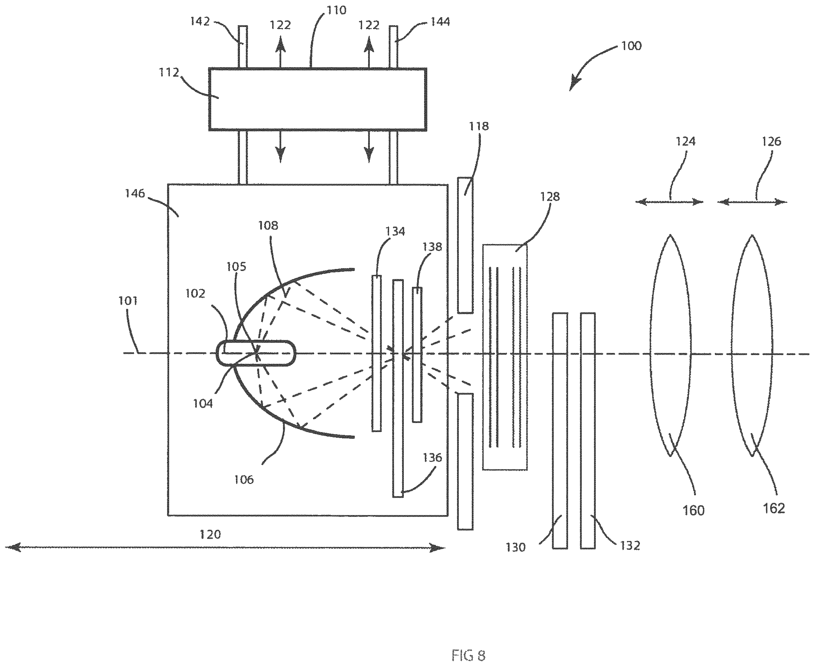

**Figure 8** shows the embodiment illustrated in **Figure 6** after the light integrator **110** has been removed in the direction indicated by arrows 122 by articulating linear drives **142** and **144** and optical components **102, 104, 105, 106, 134, 136,** and **138** have been moved by articulated carrier 146 in the direction indicated by arrows **120** toward aperture **118.** In this configuration the light **108** is reflected and controlled by reflector **106** through optical devices **134**, **136,** and **138** into the aperture or imaging gate **118,** and then through optical elements **128, 130,** and **132.** Optical elements **128**, 130, and **132** may include but not be restricted to rotating gobos, static gobos, iris, color wheels, framing shutters, frost and diffusion filters, beam shapers and other optical devices known in the art. The light may then be further controlled and directed by optical elements 160 and 162 which may provide variable beam angle or zoom functionality as well as the ability to focus on various components of the optical system before emerging as the required light beam. Lenses 160 and 162 may be independently movable along the optical axis **124** and **126** so as to provide beam angle control over the exiting light beam. Although two optical elements 160 and 162 are herein illustrated the invention is not so limited and any optical system as known in the art may be utilized to control and focus the exiting light beam. In particular in further embodiments a single optical element alone may be utilized. In further embodiments, lenses 160 and 162 may form an achromatic optical system such that it provides the same degree of beam angle change to long wavelength red light as it does to short wavelength blue light and thus avoids chromatic aberration. This ensures that the beams from the different colors of light are all the same size resulting in a uniformly colored combined beam. In yet further embodiments any number of lenses may be used as the lens system. In all cases, lenses may contain one or more optical elements. Lenses 160 and 162 are illustrated herein as bi-convex lenses however the invention is not so limited and lenses 160 and 162 may be any shaped optical clement as well known in the art and may include any number of lenses including a single lens. This applies to any of the embodiments discussed herein.

In all embodiments of the invention optical elements **128, 130, 132, 228, 230,** and 232 may include rotating gobos and static gobos. In one embodiment of the invention the rotating gobos may be of a larger diameter than the static gobos. The larger rotating gobos may be used for image projection when homogenizer **110** or **210** is inserted in to the light beam. In this configuration the large homogenized beam is most suitable for accurate sharp image projection. Such rotating gobos may be complex patterns and images designed for projection effects. Alternatively smaller static gobos may be used when homogenizer **110** or **210** is removed from the light beam. In this configuration the light beam has a peaky distribution such that it is most powerful in the center of the beam and is most suitable for beam projection effects. Such static gobos may be simple shapes such as circles and multiple apertures, designed for beam effects.

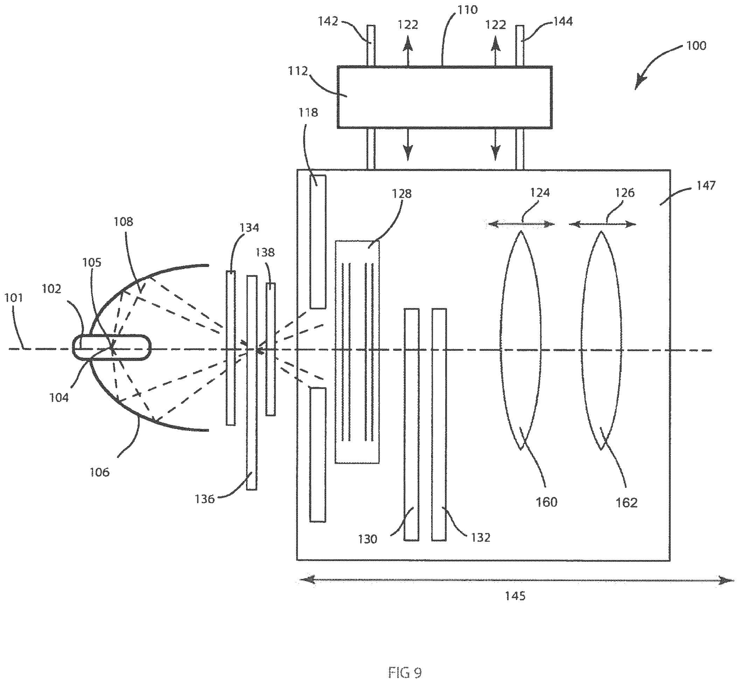

**Figure 9** illustrates an alternative embodiment. In this embodiment the aperture **118** and the components **128, 130, 132,** 160 and 162 arc mounted on an articulated carrier 147 down the light beam axis **101** from the aperture **118.** **Figure 9** illustrates the configuration of the components of the system **100** when the homogenizer **110** is in a position out of the light beam path as articulated by linear drives **142** and **144.** In further embodiments of this embodiment, the articulation of drives **142** and **144** arc coordinated with the articulation of the carrier **147** so that before the homogenizer is placed into the light beam via linear drives **142** and **144** in direction **122** toward the light beam access, the carrier **147** is automatically articulated in direction **145** away from the light source and other components **102, 104, 105**, **106,134, 136** and **138** upstream from the aperture **118** to make space for the elongated homogenizer **110** and similarly after the homogenizer **110** is removed from the light beam path, the carrier **147** is automatically articulated in direction **145** to close the gap created by the removal of the homogenizer **110** from the light beam path.

While the invention has been described with respect to a limited number of embodiments, those skilled in the art, having benefit of this disclosure, will appreciate that other embodiments may be devised and that various changes, substitutions and alterations can be made hereto without departing from the scope of the invention as defined by the appended claims.

## Claims

1. A luminaire comprising:
a light source (104) adapted to generate a light beam (116) with a light beam axis (101) and a light beam origin at the light source (104) and a light beam exit down the axis (101) from the light source (104);
a first articulated carrier (142, 144) adapted to deploy a light beam homogenizer (110) into the light beam (116) and to remove the homogenizer (110) from the light beam (116);
a second articulated carrier (146, 147) adapted to articulate other optical components of the luminaire (100) along the light beam axis (101) in coordination with the deployment or removal of the homogenizer (110) from the light beam (116);
**characterized in that**:
the homogenizer (110) is an elongated homogenizer; and
the coordination of the first and second articulated carriers (142, 144; 146, 147) is such that before the first articulated carrier (142, 144) deploys the elongated homogenizer (110) into the light beam (116), the second carrier (146, 147) is articulated to move the other optical components to make space for the elongated homogenizer (110).

2. The luminaire of claim 1, wherein the coordination of the first and second carriers (142, 144; 146, 147) is also such that after the homogenizer (110) is removed from the light beam (116) by the first carrier (142, 144), the second carrier (146, 147) is articulated to close the gap created along the axis (101) by removal of the elongated homogenizer (110).

## Patentansprüche

1. Leuchte, die umfasst:
eine Lichtquelle (104), die dazu ausgelegt ist, einen Lichtstrahl (116) mit einer Lichtstrahlachse (101) und einem Lichtstrahlursprung an der Lichtquelle (104) und einem Lichtstrahlausgang von der Lichtquelle (104) die Achse (101) hinab zu erzeugen;
einen ersten gelenkigen Träger (142, 144), der dazu ausgelegt ist, einen Lichtstrahlhomogenisator (110) in den Lichtstrahl (116) einzusetzen und den Homogenisator (110) aus dem Lichtstrahl (116) zu entfernen;
einen zweiten gelenkigen Träger (146, 147), der dazu ausgelegt ist, andere optische Komponenten der Leuchte (100) entlang der Lichtstrahlachse (101) in Koordination mit dem Einsetzen oder der Entfernung des Homogenisators (110) aus dem Lichtstrahl (116) gelenkig zu lagern;
**dadurch gekennzeichnet, dass**:
der Homogenisator (110) ein länglicher Homogenisator ist; und
die Koordination des ersten und des zweiten gelenkigen Trägers (142, 144; 146, 147) derart ist, dass, bevor der erste gelenkige Träger (142, 144) den länglichen Homogenisator (110) in den Lichtstrahl (116) einsetzt, der zweite Träger (146, 147) gelenkig gelagert wird, um die anderen optischen Komponenten zu bewegen, um für den länglichen Homogenisator (110) Platz zu schaffen.

2. Leuchte nach Anspruch 1, wobei die Koordination des ersten und des zweiten Trägers (142, 144; 146, 147) auch derart ist, dass, nachdem der Homogenisator (110) aus dem Lichtstrahl (116) durch den ersten Träger (142, 144) entfernt wird, der zweite Träger (146, 147) gelenkig gelagert wird, um den Spalt zu schließen, der entlang der Achse (101) durch die Entfernung des länglichen Homogenisators (110) erzeugt wird.

## Revendications

1. Luminaire comprenant :
une source de lumière (104) conçue pour générer un faisceau lumineux (116) ayant un axe de faisceau lumineux (101) et une origine de faisceau lumineux au niveau de la source de lumière (104) et une sortie de faisceau lumineux le long de l'axe (101) partant de la source de lumière (104) ;
un premier support articulé (142, 144) conçu pour déployer un homogénéisateur de faisceau lumineux (110) dans le faisceau lumineux (116) et pour retirer l'homogénéisateur (110) du faisceau lumineux (116) ;
un deuxième support articulé (146, 147) conçu pour articuler d'autres composants optiques du luminaire (100) le long de l'axe de faisceau lumineux (101) de manière coordonnée avec le déploiement de l'homogénéisateur (110) dans le faisceau lumineux (116) ou le retrait de l'homogénéisateur (110) du faisceau lumineux (116) ;
**caractérisé en ce que** :
l'homogénéisateur (110) est un homogénéisateur allongé ; et
la coordination des premier et deuxième supports articulés (142, 144 ; 146, 147) est telle que, avant que le premier support articulé (142, 144) ne déploie l'homogénéisateur allongé (110) dans le faisceau lumineux (116), le deuxième support (146, 147) est articulé pour déplacer les autres composants optiques afin de faire de la place pour l'homogénéisateur allongé (110).

2. Luminaire selon la revendication 1, dans lequel la coordination des premier et deuxième supports (142, 144 ; 146, 147) est également telle que, après que l'homogénéisateur (110) a été retiré du faisceau lumineux (116) par le premier support (142, 144), le deuxième support (146, 147) est articulé pour fermer l'espace vide créé le long de l'axe (101) par le retrait de l'homogénéisateur allongé (110).
